# EUROPEAN PATENT SPECIFICATION

(11) **EP 2 746 096 B1**
(45) Date of publication and mention of the grant of the patent: **28.10.2015**
(21) Application number: 13005985.0
(22) Date of filing: 20.12.2013
(51) Int. Cl.: B60N 2/28, B60N 2/427

(54) **Dynamic child restraint**
Dynamische Kinderrückhalteeinrichtung
Dispositif dynamique de retenue d'enfant

(30) Priority: 21.12.2012 AU 2012905620
(43) Date of publication of application: 25.06.2014
(73) Proprietor: Britax Childcare Pty Ltd., Sunshine, VIC 3020 (AU)
(72) Inventor: Maciejczyk, Wieslaw, Sunshine, VIC 3020 (AU)
(74) Representative: Bosch, Matthias

(56) References cited:
- EP-A1- 0 853 018
- EP-A1- 1 090 805
- WO-A1-01/38130
- GB-A- 2 350 289
- US-A- 4 480 870

## Description

### TECHNICAL FIELD

The present invention relates to a child restraint for use in a vehicle such as an automobile or the like. In a particular form the present invention relates to improvements to positioning of an occupant in the event of an accident or crash (see, for example, US 4,480,870 A, which corresponds to the preamble of claim 1).

### BACKGROUND

Child restraints have been developed to improve the safety of children traveling in vehicles. A variety of different types of child restraints have been developed for this purpose, with most child restraints consisting of a seat or chair which is supported on a rear seat of a vehicle, for receiving the child therein. There exists a variety of types of child safety seats that are approved for use with children of a variety of ages and/or sizes.

Type A child restraints are typically a rearward facing child restraint with an in-built harness, for accommodating babies/infants from birth up to around one of either 6 months (or approximately 9 kg), 12 months (or approximately 12 kg) or 30 months (or approximately 15 kg).

Type B child restraints are typically a forward facing child restraint with an in-built harness, for accommodating toddlers and young children from approximately 6 months to 4 years, or from approximately 8 - 18 kg.

Type D child restraints are typically a rearward facing child restraint with an in-built harness for children from approximately 6 months up to 4 years of age.

Type E and F child restraints are typically a booster seats or booster cushions used to accommodate children between 4 - 8 and even 10 years old, or approximately from 14 - 32 kg, and which are typically used in combination with the vehicle seat belt.

Type G child restraints are typically a forward facing child restraint for children from approximately 6 months up to 8 years of age.

Some seats may be a combination type A/B or B/E (or other combination) to accommodate a child as the child grows thereby avoiding the need to purchase, or otherwise source, a variety of different seats to accommodate a growing child.

The explanation above reflects the Australian Standards. Other countries have different ages and/or weight range for child restraints. For example, in Europe, the United Nations regulation for vehicles, ECE Regulation 44 for child restraints, has the following categories:
Group 0 and 0+: Rearward facing for children up to 10 or 12 kg respectively;
Group 1: Rearward or forward facing child restraints for children from 9 to 18 kg;
Group 2: Forward facing (possibly rearward facing) child restraints for children from 15 to 25 kg, which may either have an in-built harness or which could be a booster seat used with just the seat belt; and
Group 3: Forward facing child restraints for children from 22 to 36 kg; typically a booster seat to be used with just the seat belt.

Some seats may be a combination of Group 0 and/or Group 1 or more groups ,which may include one or more groups being rear facing.

The forces acting on a child occupant of a child restraint such as a safety seat during a crash of the vehicle carrying the child safety seat are influenced by factors including the way in which the child safety seat is attached to the vehicle, and the position, including orientation, in which the safety seat supports the occupant.

It is against this background and the problems and difficulties associated therewith that the present invention has been developed.

Certain objects and advantages of the present invention will become apparent from the following description, taken in connection with the accompanying drawings, wherein, by way of illustration and example, an embodiment of the present invention is disclosed.

### SUMMARY

According to the invention as defined in claim 1, there is provided a child restraint for a vehicle comprising a body for supporting an occupant in a first position, and wherein in the event that the vehicle is involved in a front or rear collision (or crash or accident), at least a portion of the body is adapted to move to support the occupant in a second, more upright position within the body in response to the collision irrespective of which way the occupant is facing. Additional features of the invention are disclosed in the dependent claims.

In one form, the child restraint comprises a base member, and a seat member movably supported by the base member. In one form, the seat member comprises the abovementioned body portion.

In one form, the seat member is slidably mounted to the base member. This may be by way of a pin in slot style arrangement. In an alternative, the seat member is pivotally mounted to the base member. This may be by way of a direct pivoting or hinge type connection. The seat member may also be a combination of pivotally and slidably mounted to the base member.

In one form, the child restraint comprises a locking device configured to lock the seat member in the first (or initial position), and wherein the locking device is designed and arranged to release the seat member from the initial position if the crash-induced forces reach or exceed a given threshold value.

In one form, the seat member of the child safety seat can be locked in the initial position in order to employ the child safety seat for transport of a child.

The seat member is not kept in the initial position by the locking device under all circumstances. In particular, the locking device is designed to allow transfer of the seat member from the initial position to the second position if forces urging the seat member from the first position reach or exceed a given threshold value.

When a vehicle carrying the child restraint in accordance with the invention is involved in a crash (or accident), crash induced forces will act on the child restraint. In one form, the locking device is designed and arranged to ensure that the seat member is transferred from the first position to the second position if and only if the crash-induced forces reach or exceed a given threshold value. Therefore, the seat member will be automatically transferred to the second position if the vehicle has a serious accident with either of a frontal or rear impact, depending on seat orientation.

In one form, the locking device comprises a first component and a second component which are configured to be moveable relative to each other.

In one form, the locking device is configured to adopt one of two configurations (i.e. relative positioning of the first and second components), wherein the locking device adopts the first configuration when the seat is in its first position, and the second configuration when the seat is in its second position. Transfer of the locking device from the first configuration to the second configuration then requires a given amount of force to be exerted upon the first and second components.

In one form, the locking device comprises an elongate recess or slot, and the second component comprises a projection, such as a pin, configured to be inserted into the recess or slot. The slot may exhibit varying width and or depth. One end of the slot could be widened into a circular opening, whereas the remainder of the slot may have an essentially constant width smaller than the diameter of the circular opening and the projection, so that the projection is locked in the circular opening. This would correspond to the first configuration and seat position. To transfer the locking device to the second configuration the projection must be forced into and then through the narrow section of the slot. This may involve either elastic (i.e. reversible) or inelastic (i.e. irreversible) deformation of the material defining the slot.

In one form, the first component of the locking device is secured to the seat member and the second component of the locking device is secured to the base member. Movement of the seat member relative to the base member will then automatically result in a movement of the first component of the locking device relative to the second component of the locking device. With such an arrangement of the components of the locking device, there is no need for an additional mechanism translating a movement of the seat member relative to the base member into a movement of the first component relative to the second component.

In one form, the child restraint further comprises means for biasing the seat member (or portion thereof) away from the second position. This biasing means may comprise an elastic element such as a spring, or which acts as a spring would do.

In one form, the child restraint further comprises means for biasing the seat member (or portion thereof) toward the first position. This may be useful for the purpose of returning the seat member to the first position once the crash has concluded.

In one form, the child restraint further comprises means for dissipating any kinetic energy of any movement of the seat member (or portion thereof). This may be an energy absorbing element which is arranged to be deformed when the seat member is transferred from the first position to the second position. Deformation of the energy absorbing element in the course of the transfer of the seat from the first position to the second position will absorb energy. This deformation may be either of elastic (i.e. reversible) or inelastic (ie irreversible). In particular, kinetic energy will be extracted from the motion of the seat member resulting in a deceleration of the seat member. Therefore, the transfer of the seat from the first position to the second position will be dampened. This further improves the crash behaviour of the child safety seat.

In one form, the energy absorbing member is arranged in a space located between the seat member and the base member. This energy absorbing member may comprise any one or more of a shock absorber or gas spring, or a crushable or stretchable member, which may also be elastic, but may be inelastic.

Thus far discussion has focussed on child restraints in which an entirety of a seat member is movable, however it may be that only a portion of the seat member is movable to reposition the occupant. In this case the seat member need not be positionable with respect to the base member, but may still be movable in this way so as to offer standard recline functionality.

In one form then, the body comprises a base portion and a back portion, and the movable portion (for the purpose of this invention) is at least a portion of the back portion of the body. Alternatively, the base portion may also be movable. In one form, in an alternative, the child restraint need not comprise a back portion, and the movable portion may be a seat portion (on which the child sits) movably supported on a base portion. Similarly, the movable portion may be a portion of the base portion, which is movable with respect to a remainder of the base portion.

In one form, the first position is a supine or otherwise reclined position, and the second position is a more upright position, where the first position is less upright than the second position.

Positioning the occupant more upright is useful in both forward and rearward facing scenarios, and so lends itself to use in combination (or convertible) type-A/B child restraints. In one form then, the child restraint is a combination (or convertible) type-A/B child restraint. This combination restraint permits movement between first and second positions irrespective of the direction in which the occupant is facing (i.e. forward or rearward). Where the seat is rearward facing, a more upright position is advantageous during the collision (or initial impact) phase of the crash. When a child faces rearward in a recline or supine position the deceleration forces are borne by the child's shoulders, potentially causing the head to generate tensile forces on the spine. Alternatively there is not enough engagement by the shoulder straps on the spine and the child could be ejected. By moving the child to a more upright position in the event of a crash, the deceleration forces are spread across the back of the occupant. Thus by causing the seating position which is reclined to be more upright in a crash will assist in retaining the occupant and spread the decelerating forces over the occupant's back and the back of their head. Where the seat is forward facing, a more upright position is advantageous during the rebound phase of the crash, for the same reasons explained above.

While the second position may be more upright, it need not position the occupant significantly higher than the first position, if at all. That is to say the child restraint may be configured to support the occupant more upright, while simultaneously lowering them. This offers the advantage maximising the extent to which the occupant is protected by any side wings of the restraint.

In one form, in an alternative not forming part of the present invention, the second position is a supine or otherwise reclined position, and the first position is a more upright position.

In one form, transfer of the seat member from the initial position to the second position is configured to be triggered by actuation of a seat belt provided in the vehicle. In this way, it is possible to make use of the crash sensors provided in modem vehicles which operate seat belt pretensioners. Accordingly, the child restraint may further comprise coupling means, wherein transfer of the locking device from the locking position to the release position is triggered by the seat belt exerting a force on the coupling means, the force being applied to the seat belt by a seat belt pretensioner of the vehicle.

In one form, this coupling means comprises a trigger upon which the pretensioned belt will bear, and a linkage arrangement extending to the locking device.

In one form, in an alternative, the locking device may comprise a ratchet device arrangement comprising a linear rack associated with the base member, and a pawl or equivalent associated with the seat member (although this arrangement could be reversed). The teeth of the rack are uniform but asymmetrical, each tooth having a moderate slope on one edge, and a much steeper slope on the other edge. This arrangement would lend itself to operation of the pawl or equivalent by a coupling means of the above described type, which would release the pawl, permitting the seat member to move from the first position to the second position. The pawl would permit the seat to return to the first position once crash forces subside, even though the pawl is once again engaged.

In one form, the base member comprises a latch adapted for releasable attachment of the child restraint to an anchorage provided in the vehicle. In one form, the latch is an ISOFIX latch and the anchorage is an ISOFIX anchorage. In addition or in an alternative, a tether is provided to attach the seat member to an anchorage.

A detailed description of one or more embodiments of the invention is provided below along with accompanying figures that illustrate by way of example the principles of the invention. While the invention is described in connection with such embodiments, it should be understood that the invention is not limited to any embodiment. On the contrary, the scope of the invention is limited only by the appended claims.

For the purpose of example, numerous specific details are set forth in the following description in order to provide a thorough understanding of the present invention.

The present invention may be practiced according to the claims without some or all of these specific details. For the purpose of clarity, technical material that is known in the technical fields related to the invention has not been described in detail so that the present invention is not unnecessarily obscured.

### BRIEF DESCRIPTION OF DRAWINGS

Embodiments of the present invention will be discussed with reference to the accompanying drawings wherein:
Figure 1 is a schematic side view of a rearward facing child restraint supporting a child in a first, normal or in-use position;
Figure 2 is a schematic side view of the child restraint of Figure 1, wherein the child is moved to and supported in a second, more upright position;
Figure 3 is a schematic side view of the child restraint of Figure 1 reconfigured to be forward facing;
Figure 4 is a schematic side view of the child restraint of Figure 3, wherein the child is moved to and supported in a second, more upright position;
Figure 5 is a schematic side view of a rearward facing child restraint according to a further embodiment; and
Figure 6 is a schematic side view of the child restraint of Figure 5, wherein the child is moved to and supported in a second, more upright position.

In the following description, like reference characters designate like or corresponding parts throughout the figures.

### DESCRIPTION OF EMBODIMENTS

The present invention will be described below in relation to a combination (or convertible) type-A/B child safety seat. However, it will be appreciated that the present invention could be equally applicable for use in a variety of different modes of child safety seats.

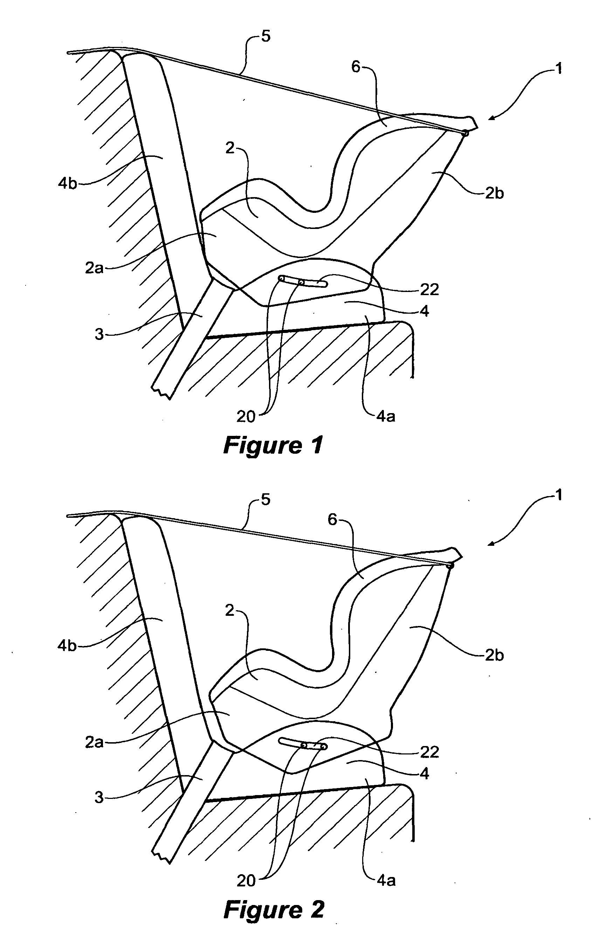

Referring now to Figures 1 through 4 then, where there is illustrated a child restraint in the form of a child safety seat 1 comprising an inbuilt harness for use with a seatbelt equipped vehicle seat by being positioned thereon and retained thereto using the vehicle's seat belts 3 and either of a tether strap 5 extending from the child safety seat 1 to a vehicle mounting point, or an ISOFIX attachment point.

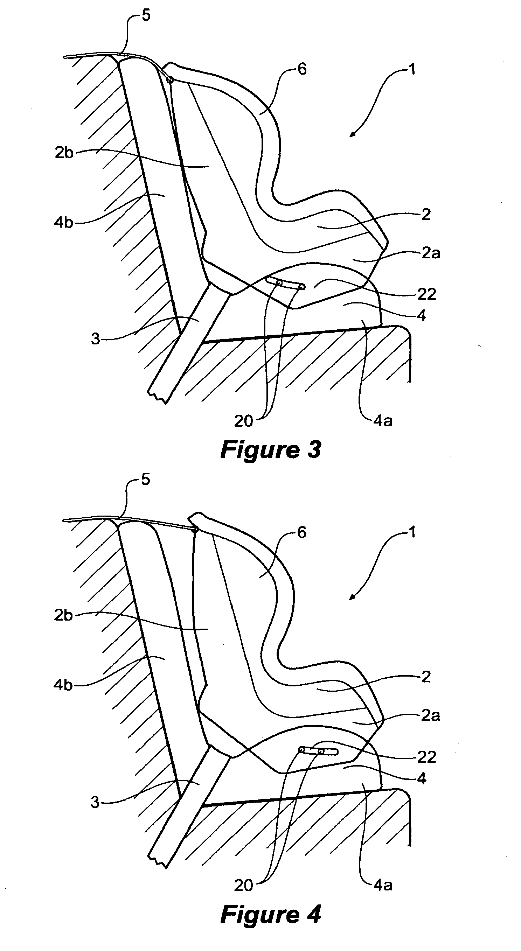

The child safety seat 1 illustrated is a convertible restraint, so it can accommodate babies from birth up to approximately 6 to 12 months in rearward-facing mode (see Figures 1 and 2), and then be converted to forward-facing for young children approximately 6 months to 4 years old (see Figures 3 and 4).

The child safety seat 1 comprises a seat base member 4 which supports the seat body member 2 upon the vehicle seat. This base 4 comprises a base portion 4a which sits upon the vehicle seat, and a back portion 4b which rests against a vehicle seat back to prevent rotation of the base 4.

The seat body 2 (also commonly referred to as a shell) comprises a seat base 2a, a seat back portion 2b, and a pair of side wings 6 extending forward of the seat back portion 2b and upward from the seat base portion 2a. The seat body 2 will typically be covered with padding and a dress cover.

In Figures 1 and 2 the child safety seat 1 is configured to be rearward facing in the vehicle, and so suitable for babies up to approximately 12 months of age. In this configuration the occupant is supported in an approximately supine position.

The base portion 2a of the seat body 2 is mounted on the base 4 so as to be biased toward this first, supine support position (as illustrated in Figure 1) but adapted, in certain circumstances, to move from this first position to a second position.

In order to facilitate this movement, the base portion 2a of the seat body comprises guides 20 (such as steel rods) running in guide tracks 22 in the form of slots provided by the base, although such an arrangement is reversible. Alternatively, moveable interconnection of this type may be achieved with a spaced apart pair of pivoting linkages or the like, or a combination of slotted and pivoting linkages.

The biasing means is a spring (not visible in Figures 1 through 4) biasing the seat body 2 towards this first, supine support position. This spring would extend between the seat body 2 (or its guide rods 20) and the base 4 and act to oppose movement of the seat 2 relative to the base 4.

The child restraint 1 further comprises means for dissipating any kinetic energy of any movement of the seat body. This means would similarly extend between the seat body 2 and the base 4 and may take the form of a small pneumatic or hydraulic shock absorber 40.

The child restraint 1 may further comprise locking means of the above described type, and incorporated into the guide tracks 22, which will lock the seat body 2 in the first position, and wherein the locking device is designed and arranged to release the seat body 2 from the first position if the crash-induced forces reach or exceed a given threshold value.

The seat body 2 will move in the event that the vehicle is involved in either of a significant front or rear end collision. In this instance it is advantageous that the seat occupant is repositioned so that the seat body 2 supports them in a more upright position within the body 2 as illustrated in Figure 2, spreading a majority of the load across or over the back, and back of the head, of the occupant.

Referring now to Figures 3 and 4, where the child safety seat has been configured to be forward facing, and support the occupant in a first, slightly reclined position (see Figure 3).

As before, the seat body 2 will move in the event that the vehicle is involved in either of a significant front or rear end collision, and more particularly during the "rebound" phase of the collision. In this instance the seat occupant is repositioned so that the seat body 2 supports them in a more upright position forward facing within the body 2 - as illustrated in Figure 4, thereby spreading a majority of the load across or over the back, and back of the head, of the occupant.

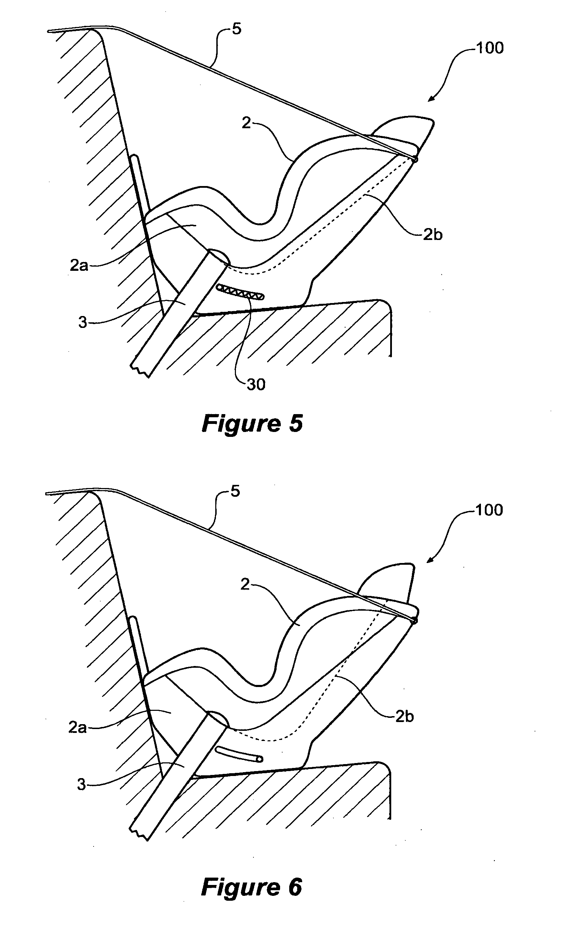

Referring now to Figures 5 and 6, which illustrate an additional embodiment of the invention. Since most of the parts of the child safety seat 100 shown in Figures 5 and 6 are identical to corresponding parts shown in the seat 1 of Figures 1 through 4, they are denoted by the same reference numerals and will not be described again in detail.

Child safety seat 100 comprises a seat body 2 which, in contrast with seat 1, sits directly upon the vehicle seat, whereas the seat body 2 of seat 1 sits on the base 4 on the seat 1.

The seat body 2 (also commonly referred to as a shell) comprises a seat base 2a, a seat back rest portion 2b, and a pair of side wings 6 extending forward relative to the seat back portion 2b and upward from the seat base portion 2a. The seat body 2 will typically be covered with padding and a dress cover.

The seat rest back portion 2b is mounted relative to the remainder of the seat body 2 so as to be biased toward this first, reclined support position (as illustrated in Figure 5) but adapted, in certain circumstances, to automatically move from this first position to a second position.

In order to facilitate this movement, the seat back rest portion 2b (along with any headrest depending therefrom) of the seat body 2 is pivotally mounted relative to the remainder of the seat body 2.

The biasing means is a spring 30 biasing seat back rest portion 2b towards this first, reclined support position. This spring 30 would extend between the seat back rest portion 2b and remainder of the seat body 2 and act to oppose movement of the seat back rest portion 2b relative to the remainder of the seat body 2.

The child restraint further comprises means for dissipating any kinetic energy of any movement of the seat back rest portion 2b. This means would similarly extend between the seat back rest portion 2b and the seat body 2, and may take the form of a small pneumatic or hydraulic shock absorber.

The seat rest back portion 2b will move in the event that the vehicle is involved in either of a significant front or rear end collision. In this instance it is advantageous that the seat occupant is repositioned so that the seat body 2 supports them in a more upright position within the body 2 - as illustrated in Figure 6, thereby reducing compression loading of their spine during the collision, and instead spread a majority of the load across or over the back of the occupant and/or through the harness.

Accordingly, the present invention provides a child restraint that reduces compression loading of the occupant's spinal cord in the event that a vehicle is involved in either of a significant front or rear end collision.

Throughout the specification and the claims that follow, unless the context requires otherwise, the words "comprise" and "include" and variations such as "comprising" and "including" will be understood to imply the inclusion of a stated integer or group of integers, but not the exclusion of any other integer or group of integers.

The reference to any prior art in this specification is not, and should not be taken as, an acknowledgement of any form of suggestion that such prior art forms part of the common general knowledge.

It will be appreciated by those skilled in the art that the invention is not restricted in its use to the particular application described. Neither is the present invention restricted in its preferred embodiment with regard to the particular elements and/or features described or depicted herein. It will be appreciated that the invention is not limited to the embodiment or embodiments disclosed, but is capable of numerous rearrangements, modifications and substitutions if not thereby departing from the scope of the invention as set forth and defined by the following claims

## Claims

1. A convertible child restraint (1) for a vehicle adapted to support an occupant in either forward or rearward facing directions in the vehicle, **characterised in that** this (1) comprises a body (2) for supporting an occupant in a first position, and wherein in the event that the vehicle is involved in a collision, at least a portion of the body (2) is adapted to move automatically to support the occupant in a second, more upright position within the body (2) in response to the collision irrespective of which way the occupant is facing.

2. The convertible child restraint (1) of claim 1, wherein the body (2) movement comprises any one or more of a fore or aft pivoting and/or translational movement.

3. The convertible child restraint (1) as in either of the preceding claims, wherein the body (2) is rearward facing, and said portion moves automatically in response to the collision.

4. The convertible child restraint (1) as in either of claims 1 or 2, wherein the body (2) is forward facing, and said portion moves automatically during a rebound phase of the collision.

5. The convertible child restraint (1) as in any one of the preceding claims, wherein this further comprises means for biasing (30) the movable portion away from the second, more upright position.

6. The convertible child restraint (1) as in any one of the preceding claims, wherein this further comprises a locking device configured to lock said portion in the first, initial position, and wherein the locking device is designed and arranged to release said portion from the initial position if the crash-induced forces reach or exceed a given threshold value.

7. The convertible child restraint (1) as in any one of the preceding claims, wherein this further comprises means for dissipating any kinetic energy (30) associated with movement of the movable portion.

8. The convertible child restraint (1) as in any one of the preceding claims, wherein the body comprises a base portion (4a) and a back portion (4b), and the movable portion is at least a portion of the back portion (4b).

9. The convertible child restraint (1) as in any of claims 1 through 7, wherein this comprises a base (4) supporting the body (2) in such a way that the body (2) is movable with respect to the base (4) and so forms the movable portion.

10. The convertible child restraint (1) as in any one of the preceding claims, wherein the body (2) provides a seat.

## Patentansprüche

1. Konvertierbare Kinderrückhaltevorrichtung (1) für ein Fahrzeug, die dazu ausgelegt ist, einen Insassen entweder in Vorwärts- oder Rückwärtsrichtung in dem Fahrzeug zu stützen, **dadurch gekennzeichnet, dass** sie (1) einen Körper (2) zum Stützen eines Insassen in einer ersten Position aufweist, und wobei im Fall, dass das Fahrzeug in eine Kollision verwickelt ist, wenigstens ein Abschnitt des Körpers (2) dazu ausgelegt ist, sich automatisch zu bewegen, um den Insassen in Reaktion auf die Kollision in einer zweiten, aufrechteren Position in dem Körper (2) zu stützen, unabhängig von der Richtung, in die der Insasse schaut.

2. Konvertierbare Kinderrückhaltevorrichtung (1) nach Anspruch 1, wobei die Bewegung des Körpers (2) eines oder mehrere einer Vorwärts- oder Rückwärts-Schwenk- und/oder -Translations-Bewegung aufweist.

3. Konvertierbare Kinderrückhaltevorrichtung (1) nach einem der vorhergehenden Ansprüche, wobei der Körper (2) nach hinten zeigt und sich der Abschnitt automatisch in Reaktion auf die Kollision bewegt.

4. Konvertierbare Kinderrückhaltevorrichtung (1) nach einem der Ansprüche 1 oder 2, wobei der Körper (2) nach vorne zeigt und sich der Abschnitt automatisch während einer Rückprallphase der Kollision bewegt.

5. Konvertierbare Kinderrückhaltevorrichtung (1) nach einem der vorhergehenden Ansprüche, wobei sie des Weiteren eine Einrichtung zum Vorspannen (30) des beweglichen Abschnitts von der zweiten, aufrechteren Position weg aufweist.

6. Konvertierbare Kinderrückhaltevorrichtung (1) nach einem der vorhergehenden Ansprüche, wobei sie des Weiteren eine Verriegelungsvorrichtung aufweist, die dazu konfiguriert ist, den Abschnitt in der ersten, Anfangsposition zu verriegeln, und wobei die Verriegelungsvorrichtung dazu ausgelegt und angeordnet ist, den Abschnitt aus der Anfangsposition freizugeben, wenn die durch den Zusammenstoß induzierten Kräfte einen vorgegebenen Schwellenwert erreichen oder überschreiten.

7. Konvertierbare Kinderrückhaltevorrichtung (1) nach einem der vorhergehenden Ansprüche, wobei sie des Weiteren eine Einrichtung zum Ableiten von kinetischer Energie (30) aufweist, die mit der Bewegung des beweglichen Abschnitts einhergeht.

8. Konvertierbare Kinderrückhaltevorrichtung (1) nach einem der vorhergehenden Ansprüche, wobei der Körper einen Basisabschnitt (4a) und einen Rückabschnitt (4b) aufweist, und wobei der bewegliche Abschnitt wenigstens ein Abschnitt des Rückabschnitts (4b) ist.

9. Konvertierbare Kinderrückhaltevorrichtung (1) nach einem der Ansprüche 1 bis 7, wobei sie eine Basis (4) aufweist, die den Körper (2) derart stützt, dass der Körper (2) in Bezug auf die Basis (4) bewegbar ist und so den beweglichen Abschnitt bildet.

10. Konvertierbare Kinderrückhaltevorrichtung (1) nach einem der vorhergehenden Ansprüche, wobei der Körper (2) einen Sitz bereitstellt.

## Revendications

1. Dispositif (1) de retenue convertible pour enfant pour un véhicule, adapté à supporter un occupant dans des sens faisant face vers l'avant ou vers l'arrière dans le véhicule, **caractérisé en ce que** celui-ci (1) comprend un corps (2) pour supporter un occupant dans une première position, et dans lequel, dans le cas où le véhicule est impliqué dans une collision, au moins une partie du corps (2) est adapté à se déplacer automatiquement pour supporter l'occupant dans une deuxième position plus verticale à l'intérieur du corps (2) en réponse à la collision quel que soit le sens auquel l'occupant fait face.

2. Dispositif (1) de retenue convertible pour enfant selon la revendication 1, dans lequel le mouvement du corps (2) comprend un quelconque ou plus parmi un pivotement vers l'avant ou vers l'arrière et/ou un mouvement de translation.

3. Dispositif (1) de retenue convertible pour enfant selon l'une ou l'autre des revendications précédentes, dans lequel le corps (2) fait face vers l'arrière, et ladite partie se déplace automatiquement en réponse à la collision.

4. Dispositif (1) de retenue convertible pour enfant selon l'une ou l'autre des revendications 1 ou 2, dans lequel le corps (2) fait face vers l'avant, et ladite partie se déplace automatiquement lors d'une phase de rebond de la collision.

5. Dispositif (1) de retenue convertible pour enfant selon l'une quelconque des revendications précédentes, dans lequel celui-ci comprend en outre un moyen pour pousser (30) la partie mobile à l'écart de la deuxième position plus verticale.

6. Dispositif (1) de retenue convertible pour enfant selon l'une quelconque des revendications précédentes, dans lequel celui-ci comprend en outre un dispositif de verrouillage configuré pour verrouiller ladite partie dans la première position initiale, et dans lequel le dispositif de verrouillage est conçu et agencé pour libérer ladite partie de la position initiale si les forces induites par l'accident atteignent ou excèdent une valeur de seuil donnée.

7. Dispositif (1) de retenue convertible pour enfant selon l'une quelconque des revendications précédentes, dans lequel celui-ci comprend en outre un moyen pour dissiper une quelconque énergie cinétique (30) associée avec le mouvement de la partie mobile.

8. Dispositif (1) de retenue convertible pour enfant selon l'une quelconque des revendications précédentes, dans lequel le corps comprend une partie de base (4a) et une partie arrière (4b), et la partie mobile est au moins une partie de la partie arrière (4b).

9. Dispositif (1) de retenue convertible pour enfant selon l'une quelconque des revendications 1 à 7, dans lequel celui-ci comprend une base (4) supportant le corps (2) de telle manière que le corps (2) est mobile par rapport à la base (4) et forme ainsi la partie mobile.

10. Dispositif (1) de retenue convertible pour enfant selon l'une quelconque des revendications précédentes, dans lequel le corps (2) offre un siège.
